# EUROPEAN PATENT SPECIFICATION

(11) **EP 3 938 665 B1**
(45) Date of publication and mention of the grant of the patent: **11.01.2023**
(21) Application number: 20713375.2
(22) Date of filing: 04.03.2020
(51) Int. Cl.: F16B 12/20

(54) **JOINING DEVICE FOR TWO PANELS OF FURNITURE OR OTHER FURNISHING ITEMS**
VERBINDUNGSVORRICHTUNG FÜR ZWEI MÖBELPLATTEN ODER ANDERE EINRICHTUNGSGEGENSTÄNDE
DISPOSITIF D'ASSEMBLAGE POUR DEUX PANNEAUX DE MEUBLE OU D'AUTRES ÉLÉMENTS D'AMEUBLEMENT

(30) Priority: 13.03.2019 IT 201900003649
(43) Date of publication of application: 19.01.2022
(73) Proprietor: LEONARDO S.r.l., 22060 Figino Serenza (CO) (IT)
(72) Inventor: CATTANEO, Carlo, 22060 Figino Serenza (CO) (IT)
(74) Representative: Franco Martegani S.r.l.
(86) International application number: PCT/IB2020/051861
(87) International publication number: WO 2020/183298

(56) References cited:
- DE-A1- 2 546 751
- US-A- 5 823 700

## Description

The present invention relates to two panels of furniture or other furnishing items comprising a perfected joining device between them, in particular between a shoulder and a shelf.

In the field of furniture and other furnishing items in general that use panels, various types of joining and blocking systems between two panels that must be stably connected, for example between a shoulder and a shelf, are known and shown for example in DE 25 46 751 A1 or US 5 823 700 A.

In this description, the generic term "shelf" means above all a base or a top, as well as any intermediate shelf of a piece of furniture.

In general, the positioning of joints in panels is easy as a protruding pin is provided in a first panel (for example a shoulder) and elements for receiving and blocking the pin in a second panel (for example a base or shelf), both arranged in relative holes of the two panels.

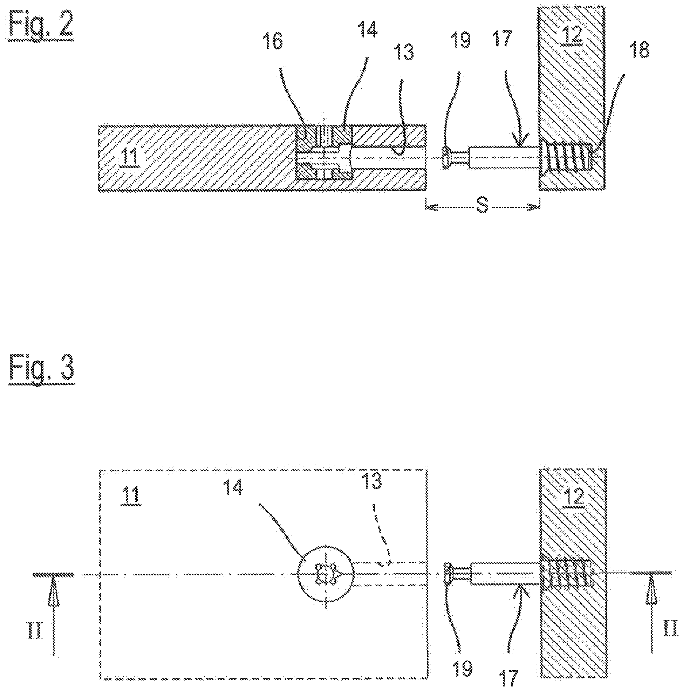

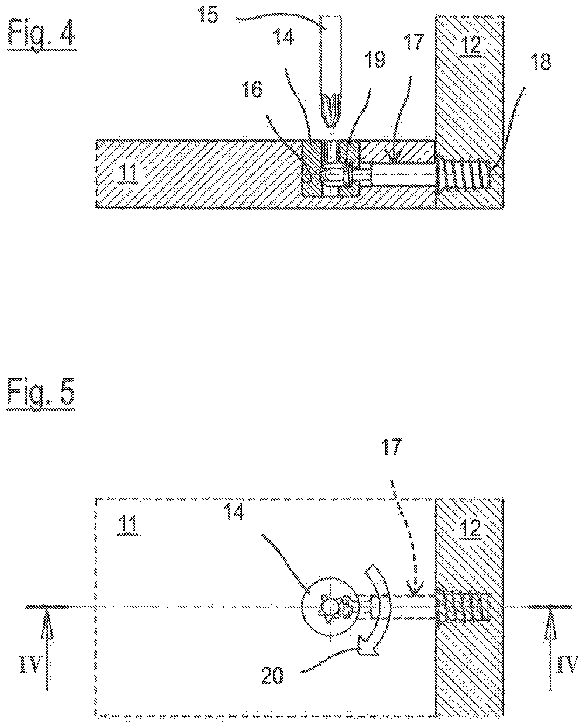

Figures 2, 3, 4 and 5 show a typical example of a joint in which a first panel 11, such as a horizontal base or shelf i.e. parallel to the floor or walking surface, must be connected to a second panel 12, such as a shoulder vertical i.e. perpendicular with respect to both the floor P and the first panel 11. The first panel 11 has at one end of its first horizontal blind holes 13, an eccentric joint 14 which can be actuated with a screwdriver 15. The eccentric joint 14 is arranged in the panel 11 in a second vertical blind hole thereof 16 perpendicular to the first hole 13 to cross the first hole 13. A pin 17, on the other hand, is arranged in the second panel or shoulder 12, in a bush or simply screwed into a hole 18 horizontal with respect to the floor. The pin 17 protrudes from the second panel 12 so that it can be inserted and fitted into the hole 13 of the first panel 11 and reach the eccentric joint 14 with an end head 19 thereof. Figures 2 and 3 show a sectional and plan view of the extracted or exploded position of the parts with the shoulder 12 and base 11 detached before being connected to each other. Figures 4 and 5 on the other hand show the two panels 11, 12 adjacent to each other, with the pin 17 inserted in the hole 13 of the shelf 11 and blocked by means of the eccentric joint 14 rotated according to the arrow 20 by means of the screwdriver 15.

Above all from figures 2 and 3 it can be seen that in order to be able to be brought closer and coupled, the two panels 11, 12 must be kept at a certain distance S, at least equal to that of the part T of the pin 17 protruding from the shoulder 12 so as to allow their insertion in the hole 13.

The blocking actuation of these joints is then effected in a wide variety of ways and with the most diverse devices, well known to persons skilled in the art.

This arrangement does not have any particular problems given the variety of solutions available when the connection between the panels takes place in an open space that is easily accessible and in which the two panels to be joined and coupled can be easily moved together.

Furthermore, in some of these applications, the parts of furniture or furnishing item, i.e. the above-mentioned panels, can or must be positioned in extremely narrow spaces, in particular in width, with difficulty for the approaching operations between the same before tightening and blocking the joint, for example between the shoulders and shelves or bases.

A particular condition is that in which the furniture must be arranged in a recess with an extremely limited free space between the shoulders 12 and the side walls V parallel to said shoulders 12.

The joining example of the figures described above causes a serious problem when the panels must be mounted in a recess that is extremely limited in its width, as it is not possible to drag the assembled furniture or connected panels 11, 12 outside the recess as they must be mounted inside the same.

For these specific cases, solutions with a relatively suitable functioning have been studied and used but that involve both problems of difficult assembly and also problems relating to a particular construction complication of the joint which make them expensive on the one hand, and on the other delicate and not always satisfactorily functional due to their difficult access.

The general objective of the present invention is therefore to provide two panels of furniture or other furnishing items comprising a perfected joining device between them, in particular between a shoulder and a shelf, capable of solving the above-mentioned drawbacks of the prior art in a simple, economic and functional manner.

A further objective of the present invention is to provide two panels comprising a perfected joining device between them that has a minimum encumbrance, at the same time being quite easily accessible from extremely minimal spaces between the shoulder panels of the furniture or furnishing item and the side walls of the recess in which it must be arranged and assembled.

Another objective of the present invention is to provide a joining device that can be used both between the shoulder and the base or shelf, and between the shoulder and the top and that can be used in any type of connection between two panels of a piece of furniture or furnishing item.

Yet another objective of the present invention is to provide a joining device which allows immediate and automatic positioning and blocking.

The above objectives are achieved by two panels of furniture or other furnishing items comprising a joining device between them produced according to independent claim 1 and the following sub-claims.

The structural and functional characteristics of the present invention and its advantages with respect to the known art will appear even more evident from the following description, referring to the attached schematic drawings, which show embodiment examples of the invention itself, all having the same innovative concept. In the drawings:

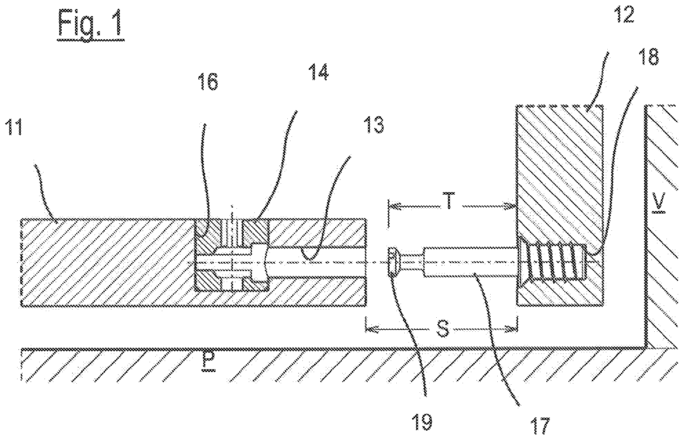

- figure 1 is a plan view from above of an environment in which a piece of furniture is provided with joining devices according to the prior art;
- figures 2 and 3 are a sectional view and a plan view showing a joining device of those used in the furniture of figure 1 with parts exploded with respect to the panels in which they are applied for their stable connection;
- figures 4 and 5 are a sectional view and a plan view showing the joining device shown in Figures 2 and 3 when tightened to firmly connect the panels;
- figure 6 is a plan view from above of an environment where a piece of furniture equipped with a joining device according to the present invention is arranged;
- figures 7 and 8 are two sectional views rotated by 90° with respect to each other showing a joining device according to the present invention with parts inserted in panels of a piece of furniture as shown in figure 6 with panels exploded before their stable connection;
- figures 7b and 8b are views similar to those of figures 7 and 8 with the parts of the joining device according to the present invention partially coupled with each other in a first assembly step in which the coupling between the parts is effected;
- figure 7c shows a partially split perspective sectional view of the joining device shown in figure 7b to which a rotation wrench has been applied;
- figures 7d and 8d are a sectional view and a plan view of parts of the joining device according to the present invention tightened together once the assembly has been completed, juxtaposed and rotated during the coupling step of the joining device;
- figure 7e shows a partially split perspective sectional view of the joining device shown in figure 7d once rotated with the rotation wrench from the position of figure 7c;
- figures 7f and 8f are views similar to those of figures 7d and 8d with the parts of the joining device according to the present invention tightened together once the assembly with tightening of the joining device has been completed;
- figures 9 and 10 show a perspective view of the parts of the joining device shown in figures 7 and 8 exploded together and the sectional elements of figure 7 respectively in an exploded perspective view;

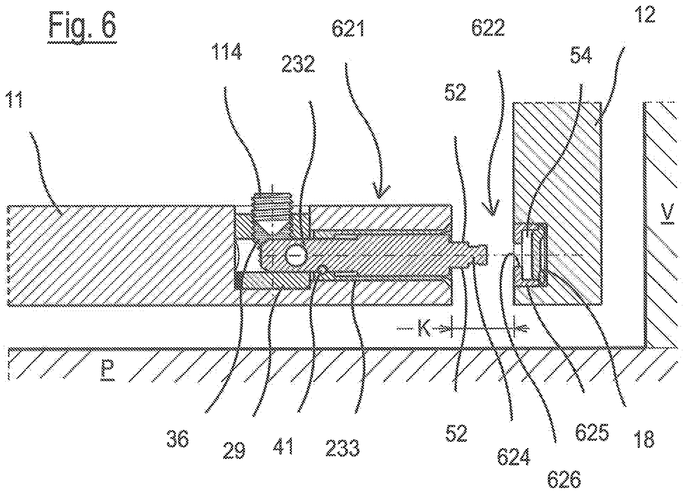

With reference in general to figures 6 to 10, two panels of furniture or other furnishing items comprising a perfected joining device between them, in particular between a shoulder and a shelf, according to the present invention.

Figure 6, for example, shows an end part of a recess of an environment in which a piece of furniture is arranged, partially shown therein through its base 11 or first panel and its shoulder 12 or second panel, which must be connected and firmly blocked.

In order to do this and have a distance K much shorter than that S of the state of the art, a perfected joining device according to the present invention is installed between the two panels 11, 12 before being coupled.

In the joining device, between two panels 11, 12 of furniture or other furnishing items, it can be noted that the two panels 11, 12 are positioned perpendicular to each other, i.e. the base 11 horizontally and the shoulder 12 in vertical with respect to an underlying floor P.

As for the example of the state of the art, a first horizontal blind hole 13 is obtained on one side in the base 11 or first panel, which crosses with a vertical hole 16, and at the internal end of both holes 13, 16, a connection and blocking system is provided comprising, for example, a grub screw or headless screw 114 positioned in a barrel 29 which can be actuated with a screwdriver 15. In the second panel or shoulder 12, on the other hand, there is a blind hole 18 horizontal with respect to the floor P, directed according to a direction coinciding with or parallel to an axis X of the first horizontal blind hole 13 of the first panel 11 or base 11 of the furniture.

Also according to the present invention, the joining device is of the type that a pin or plug extends from a first panel 11 and is inserted in a complementary seat of a second panel 12, and the above stable connection and blocking system of said pin or plug is provided inside said seat, wherein said system in the non-limiting example shown, comprises the above-mentioned grub screw or headless screw 114 and barrel 29.

With the joining device assembled and operative, an edge B of the first panel 11 is stably abutted against a surface C of the second panel 12 to obtain the stable coupling between said panels.

The joining device of the present invention is characterized in that said pin or plug is divided into two sections 621, 622, a first section 621 provided on the first panel 11 and a second section 622 provided on the second panel 12. As will be seen, said sections 621, 622 can be releasably coupled with each other by means of a bayonet coupling rotatable on a plane parallel to one of said panels 11 or 12, in order to allow not only the assembly but also disassembly.

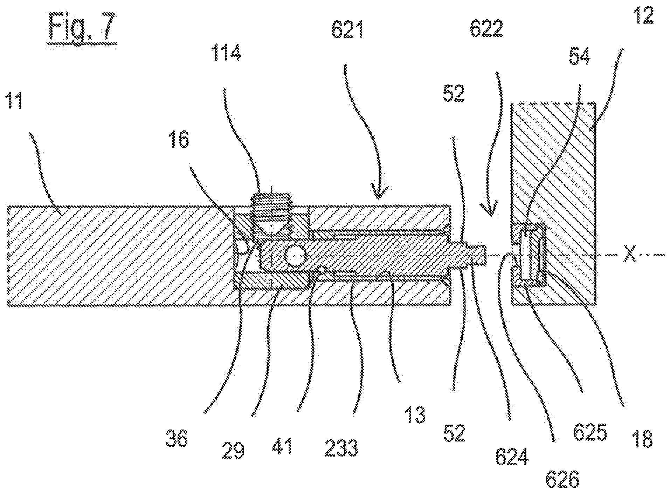

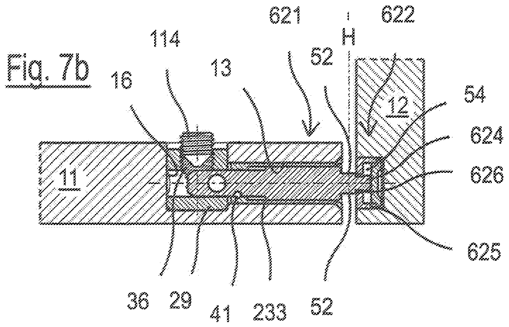

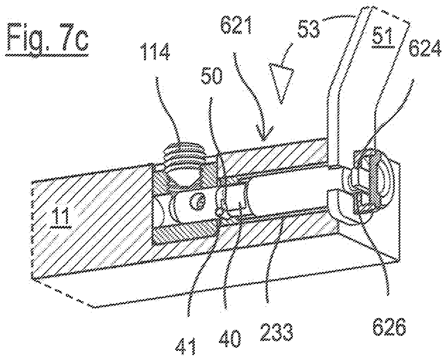

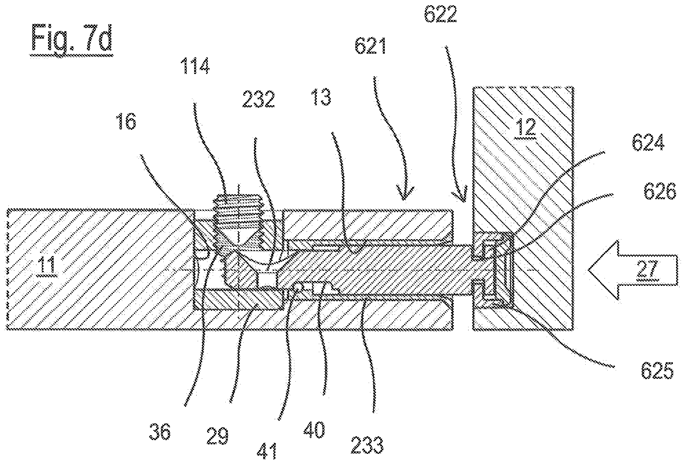

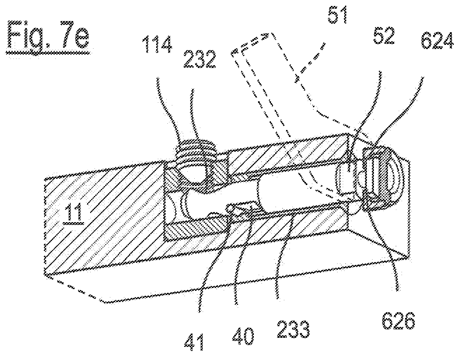

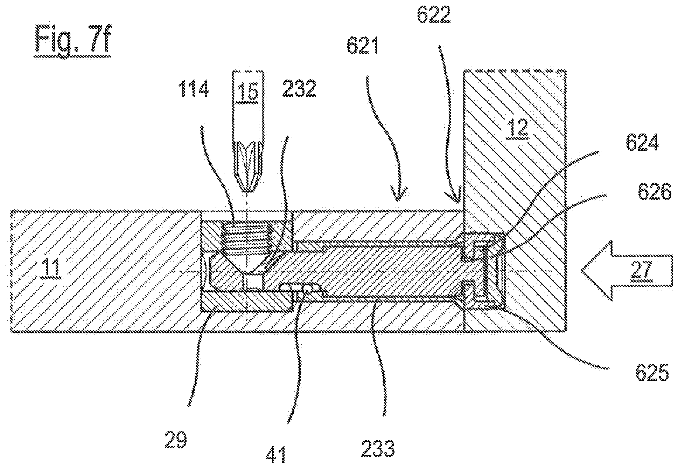

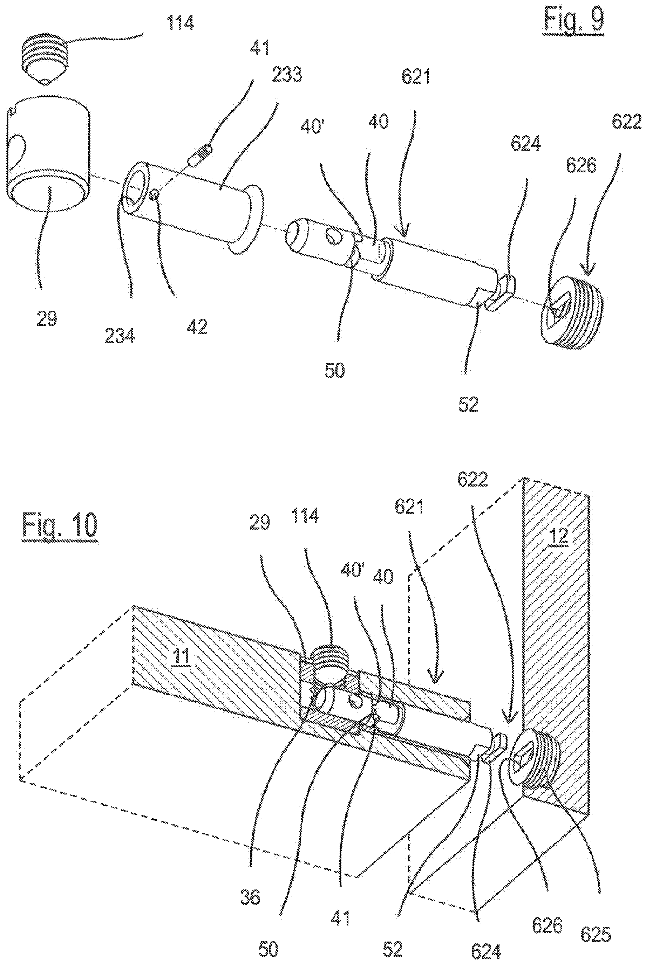

Figures 7 and 9 in particular show how in this joining device according to the invention, the first section 621 of the pin consists of a male part inserted at least partially in the first horizontal blind hole 13 of the first panel or base 11. Likewise, the second section 622 of the pin consists of a female part which is at least partially inserted in the blind hole 18 formed in the second panel or shoulder 12, aligned with the first hole 13 of the first panel or base 11.

In particular, the figures show how the first section 621 of the pin comprises a cylindrical element or body which extends into the hole 13 and provides at a first end, a flared housing 232 suitable for receiving the tip of the grub screw 114 so that the tip of the grub screw 114 fits into said housing 232 and blocks said grub screw-joint 114-barrel 29 as well as the first section 621 of the pin.

At a second end of the first section 621 of the pin, a bayonet extension 624 is provided, for example with a flat T-shaped end, which forms the male end part. Furthermore, the second section 622 of the pin comprises a threaded cylindrical body 625, which is screwed into an internal threading of the hole 18 of the second panel or shoulder 12. A slotted eye 626 is produced in this cylindrical body 625, which forms the female part inserted in the shoulder 12 and which is suitable for receiving the bayonet extension 624 of the first section 621 in a rear annular chamber 54 thereof.

The bayonet extension 624 of the first section 621 is associated with the slotted eye 626 of the second section 622 with a simple relative engagement translation between the parts followed by a rotation of 90° so as to reciprocally engage the two sections 621, 622 of the pin.

Figure 6 shows how the joining device of the invention allows the two panels 11, 12 to be kept at a minimum distance K from each other which is just enough to allow the assembly of the device itself in an operative position. The various components of the device are arranged as indicated above.

It can also be noted that the first hole 13 of the first horizontal panel or base 11 has a larger diameter than that of the cylindrical element of the first section 621 as it also receives a bush 233. The bush 233 provides at its end facing the inside of the hole 13 of the panel, a hole 234 having a smaller diameter.

In particular, figures 9 and 10 show how the cylindrical element of the first section 621 of the pin provides, on a portion of its side surface, a milled plane 40 with an anti-rotation function limited to 90°. This milled plane 40, in fact, houses a small plug 41 which is inserted in a side hole 42 of the bush 233. It can also be noted how the milled plane 40, in one of its ends 40' facing the grub screw or headless screw 114 of the stable connection and blocking system of the sections 621, 622 of the pin, has a hollow seat curved for 90° indicated with 50, which defines a 90° rotation seat for abutting and stopping the first section 621 of the pin, in rest position.

The small pin 41, the milled plane 40 and the hollow seat curved for 90° indicated with 50 are arranged to prevent the total rotation of the first section 621 of the pin and allow, by rotating by only 90°, the grub screw 114 to be oriented and aligned with the respective flared housing 232 formed in the same section 621 of the pin.

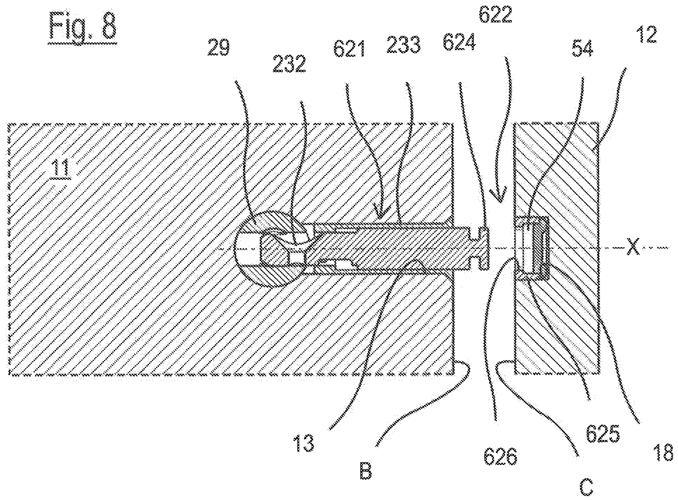

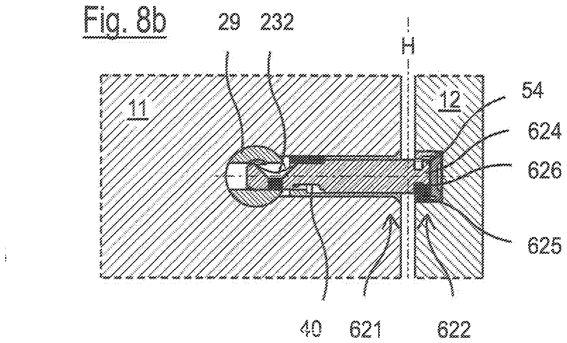

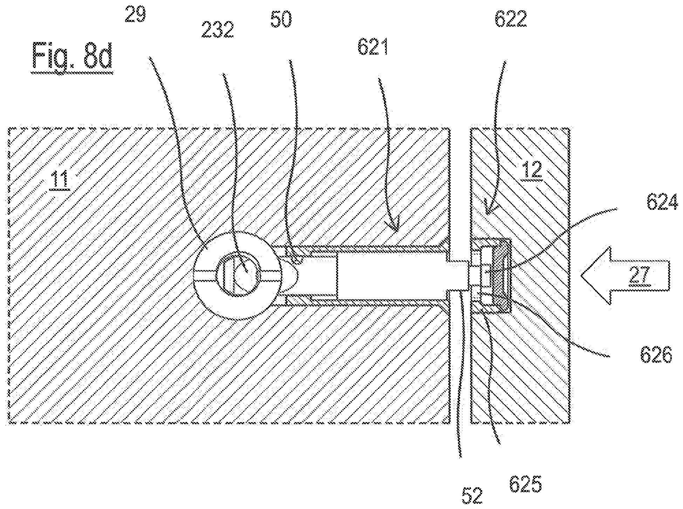

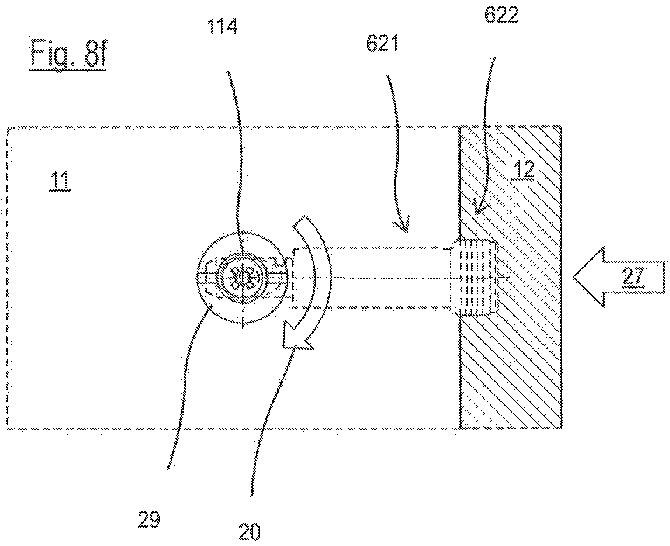

From this position (figures 7 and 8), the panels 11, 12 are brought together according to an alignment axis X of the holes 13 and 18 indicated in figure 7 with insertion of the bayonet extension 624 of the first section 621 in the slotted eye 626 of the second section 622 (figures 7b and 8b).

At this point, a rotation wrench 51 is applied in correspondence with two milled planes 52 formed just before the bayonet extension 624 of the first section 621 of the pin (figure 7c) in order to allow the rotation of the first section 621 of the pin.

By rotating the wrench 51 according to the arrow 53 of figure 7c, the bayonet extension 624 of the first section 621 is rotated by 90° in the slotted eye 626 of the second section 622 reaching the position of figure 7e.

Figures 7d and 8d show how the first section 621 of the pin is arranged.

It should be noted, in fact, that in the insertion position of the first section 621 in the slotted eye 626 of the second section 622, the bayonet extension 624 with a flat T-shaped end is positioned on a horizontal plane parallel to the floor P.

The flared housing 232, suitable for receiving the tip of the grub screw 114, is arranged rotated by 90° with respect to the horizontal plane parallel to the floor P. The plug 41 is inserted in the hollow curved seat 50 rotated by 90° with respect to the milled plane 40, also rotated by 90° from the horizontal plane parallel to the floor P.

From this position shown in figure 7c, by acting according to the arrow 53 to rotate the first section 621 of the pin by 90°, the position of figure 7e is reached, identical to those of figures 7d and 8d.

It should be noted that this rotation is effected on a plane H parallel to the second panel 12 and perpendicular to the first panel 11. In this way, it can be observed that the sections 621 and 622 can be releasably coupled together with a translation on a horizontal plane parallel to the floor and with a rotation on said rotation plane H perpendicular to the floor P.

The rotation allows the coupling between the first section 621 and the second section 622 of the pin to be completed, constraining them to the translation according to the axis X, after which, by acting according to the arrow 27, the first section 621 is inserted completely inside the hole 13. The housing 232 is thus aligned with the grub screw 114.

This coupling step is followed by a tightening step of the joining device, acting on the screwdriver 15 which screws the grub screw 114 according to the arrow 20 so as to bring its tip to be positioned within the annular housing 232 of the first section 621 of the pin (figures 7f and 8f).

The actuation of the grub screw 114 tightens the sections 621, 622 of the pin thus coupled, firmly blocking them as the bayonet extension 624 of the first section 621 cannot slip out of the slotted eye 626 of the second section 622 and the grub screw 114 engages the first section 621 within the barrel 29 in the first panel 11.

The joining device thus acts to firmly abut the edge B of the first panel 11 against the surface C of the second panel 12 creating a stable coupling between the panels 11, 12 (figures 7f and 8f).

It is evident that the sections 621, 622 of the pin can have inverted engagement parts with respect to what is illustrated. One section 621 therefore provides one end with a slotted eye 626 and the other section 622 an end provided with a bayonet extension 624, by suitably modifying the elements and parts that collaborate with them. This arrangement not shown simply represents a technical equivalent.

From what has been described and illustrated above, it can be seen that a joining device according to the invention perfectly achieves the objectives indicated.

It can also be noted how a joining device according to the invention is such as to allow the immediate and automatic positioning and blockage between the parts in which it is inserted.

It should also be pointed out that a device of this kind functions perfectly also for normal applications that do not require limited positioning and assembly spaces between the parts.

It is thus evident that a device according to the invention is extremely simple and functional.

Furthermore, this device is suitable for front actuation and can be positioned in extremely minimal spaces between the furniture and the floor or ceiling and the side walls of a recess.

The arrangement of suitable actuation and motion transmission rods, in fact, allows the device to be activated both in a front and rear position of the furniture.

The forms and structure for the production of a joining device according to the present invention, as also the materials and assembly modes, can naturally differ from those shown by way of non-limiting example in the drawings.

The objectives mentioned in the preamble of the description have thus been achieved.

The protection scope of the present invention is defined by the enclosed claims

## Claims

1. Two panels of furniture or other furnishing items, one (11) positioned perpendicular to the other (12), comprising a perfected joining device between them, wherein a pin or plug extends from the first panel (11) and is inserted in a complementary seat of the second panel (12 ), a stable connection and blocking system (114) of said pin or plug being provided inside said seat, with an edge (B) of a panel (11) firmly abutted against a surface (C) of the other panel (12), wherein said pin or plug is divided into two sections (621, 622), a first section provided on the first panel (11) and a second section provided on the second panel (12), releasably intercoupled with each other with a translation movement to create a coupling between the parts followed by a 90° rotation movement on a plane (H) parallel to one of said panels (11, 12) so as to reciprocally engage the two sections (621, 622) of the pin, **characterized in that** said first section (621) arranged on said first panel (11) has a cylindrical element which, on a portion of its side surface has a milled plane (40) with an anti-rotation function, said milled plane (40) housing a plug (41) which is inserted in a side hole (42) of a socket (233) housed in said hole (13) of said first panel (11) and housing said first section (621), said milled plane (40) in one of its ends (40'), facing a grub screw or headless screw (114) of the stable connection and blocking system of the sections (621, 622) of the pin, has a recessed seat curved by 90° (50) which defines a 90°-limited-rotation and abutment or stoppage seat of the first section (621) of the pin, in rest position.

2. The two panels of furniture or other furnishing items according to claim 1, **characterized in that** said first section (621) comprises a male part provided in said first panel (11) and said second section (622) comprises a female part provided on said second panel (12) suitable for being intercoupled.

3. The two panels of furniture or other furnishing items according to claim 2, **characterized in that** said male part of said first section (621) provides a bayonet extension (624) and said female part of said second section (622) provides a slotted eye (626) suitable for receiving said bayonet extension (624) in engagement forming a bayonet coupling.

4. The two panels of furniture or other furnishing items according to claim 3, **characterized in that** said bayonet extension (624), once inserted in said slotted eye (626) provided in said second panel (12) , is rotated by 90° on a plane (H) parallel to said second panel (12) .

5. The two panels of furniture or other furnishing items according to one or more of the previous claims from 1 to 4, **characterized in that** said first section (621) arranged on said first panel (11) has a cylindrical element of which an end cooperates with said stable connection and blocking system (114) positioned in said first panel (11).

6. The two panels of furniture or other furnishing items according to according to claim 5, **characterized in that** said stable connection and blocking system is in the form of a grub screw or headless screw (114) interacting with a housing (232) formed in said cylindrical body of said first section (621).

7. The two panels of furniture or other furnishing items according to according to one or more of the previous claims, **characterized in that** said first panel (11) is a horizontal panel and said second panel (12) is a vertical panel.

## Patentansprüche

1. Zwei Platten von Möbeln oder anderen Einrichtungsgegenständen, von denen eine (11) senkrecht zur anderen (12) positioniert ist, mit einer perfektionierten Verbindungsvorrichtung zwischen diesen, bei der sich ein Stift oder ein Zapfen von der ersten Platte (11) aus erstreckt und in einen komplementären Sitz der zweiten Platte (12) eingesetzt ist, wobei ein stabiles Verbindungs- und Blockierungssystem (114) des Stifts oder des Zapfens im Inneren des Sitzes vorgesehen ist, wobei ein Rand (B) einer Platte (11) fest gegen eine Fläche (C) der anderen Platte (12) anliegt, wobei der Stift oder Zapfen in zwei Abschnitte (621, 622) unterteilt ist, wobei ein erster Abschnitt an der ersten Platte (11) und ein zweiter Abschnitt an der zweiten Platte (12) vorgesehen ist, die miteinander lösbar mit einer Translationsbewegung gekoppelt sind, um eine Kopplung zwischen den Teilen zu erzeugen, gefolgt von einer 90°-Drehbewegung auf einer Ebene (H) parallel zu einer der Platten (11, 12), um die beiden Abschnitte (621, 622) des Stifts wechselseitig in Eingriff zu bringen, **dadurch gekennzeichnet, dass** der erste Abschnitt (621), der an der ersten Platte (11) angeordnet ist, ein zylindrisches Element aufweist, das auf einem Abschnitt seiner Seitenfläche eine gefräste Ebene (40) mit einer Anti-Rotationsfunktion aufweist, wobei die gefräste Ebene (40) einen Zapfen (41) aufnimmt, der in ein Seitenloch (42) einer Buchse (233) eingesetzt ist, die in dem Loch (13) der ersten Platte (11) untergebracht ist und den ersten Abschnitt (621) aufnimmt, wobei die gefräste Ebene (40) an einem ihrer Enden (40'), das einer Madenschraube oder einer kopflosen Schraube (114) des stabilen Verbindungs- und Blockierungssystems der Abschnitte (621, 622) des Stifts zugewandt ist, einen um 90° gekrümmten vertieften Sitz (50) aufweist, der einen Sitz für eine um 90° begrenzte Drehung und einen Anschlag- oder Stoppsitz des ersten Abschnitts (621) des Stifts in einer Ruheposition definiert.

2. Zwei Platten von Möbeln oder anderen Einrichtungsgegenständen nach Anspruch 1,
**dadurch gekennzeichnet, dass** der erste Abschnitt (621) ein Steckteil umfasst, das an der ersten Platte (11) vorgesehen ist, und der zweite Abschnitt (622) ein Buchsenteil umfasst, das an der zweiten Platte (12) vorgesehen ist, und die geeignet sind, miteinander gekoppelt zu werden.

3. Zwei Platten von Möbeln oder anderen Einrichtungsgegenständen nach Anspruch 2,
**dadurch gekennzeichnet, dass** das Steckteil des ersten Abschnitts (621) eine Bajonettverlängerung (624) bereitstellt und das Buchsenteil des zweiten Abschnitts (622) eine geschlitzte Öse (626) bereitstellt, die geeignet ist, die Bajonettverlängerung (624) unter Bildung einer Bajonettkupplung in Eingriff aufzunehmen.

4. Zwei Platten von Möbeln oder anderen Einrichtungsgegenständen nach Anspruch 3,
**dadurch gekennzeichnet, dass** die Bajonettverlängerung (624) nach dem Einsetzen in die geschlitzte Öse (626), die in der zweiten Platte (12) vorgesehen ist, um 90° in einer Ebene (H) parallel zur zweiten Platte (12) gedreht ist.

5. Zwei Platten von Möbeln oder anderen Einrichtungsgegenständen nach einem der Ansprüche 1 bis 4, **dadurch gekennzeichnet, dass** der erste Abschnitt (621), der an der ersten Platte (11) angeordnet ist, ein zylindrisches Element aufweist, von dem ein Ende mit dem stabilen Verbindungs- und Blockiersystem (114) zusammenwirkt, das in der ersten Platte (11) positioniert ist).

6. Zwei Platten von Möbeln oder anderen Einrichtungsgegenständen nach Anspruch 5,
**dadurch gekennzeichnet, dass** das stabile Verbindungs- und Blockierungssystem die Form einer Madenschraube oder einer kopflosen Schraube (114) hat, die mit einem Gehäuse (232) zusammenwirkt, das in dem zylindrischen Körper des ersten Abschnitts (621) ausgebildet ist).

7. Zwei Platten von Möbeln oder anderen Einrichtungsgegenständen nach einem der vorhergehenden Ansprüche, **dadurch gekennzeichnet, dass** die erste Platte (11) eine horizontale Platte ist und die zweite Platte (12) eine vertikale Platte ist.

## Revendications

1. Deux panneaux de meubles ou d'autres éléments d'ameublement, l'un (11) positionné perpendiculairement à l'autre (12) comprenant entre eux un dispositif d'assemblage perfectionné, une broche ou une cheville s'étendant à partir du premier panneau (11) et étant insérée dans un siège complémentaire du second panneau (12), un système de liaison et de blocage stable (114) de ladite broche ou cheville étant prévu à l'intérieur dudit siège, un bord (B) d'un panneau (11) étant fermement en butée contre une surface (C) de l'autre panneau (12), ladite broche ou cheville étant divisée en deux sections (621, 622), une première section prévue sur le premier panneau (11) et une seconde section prévue sur le second panneau (12), accouplées de manière amovible l'une à l'autre avec un mouvement de translation pour créer un accouplement entre les pièces suivi d'un mouvement de rotation de 90° sur un plan (H) parallèle à l'un desdits panneaux (11, 12) de façon à mettre en prise réciproquement les deux sections (621, 622) de la broche, **caractérisés en ce que** ladite première section (621) agencée sur ledit premier panneau (11) possède un élément cylindrique qui, sur une partie de sa surface latérale, présente un plan fraisé (40) avec une fonction anti-rotation, ledit plan fraisé (40) logeant une cheville (41) qui est insérée dans un trou latéral (42) d'une douille (233) logée dans ledit trou (13) dudit premier panneau (11) et logeant ladite première section (621), ledit plan fraisé (40) dans l'une de ses extrémités (40'), faisant face à une vis d'arrêt ou vis sans tête (114) du système de liaison et de blocage stable des sections (621, 622) de la broche, possédant un siège évidé courbé à 90° (50) qui définit un siège de rotation limitée à 90° et un siège de butée ou d'arrêt de la première section (621) de la broche, dans la position de repos.

2. Deux panneaux de meuble ou d'autres articles d'ameublement selon la revendication 1, **caractérisés en ce que** ladite première section (621) comprend une pièce mâle prévue dans ledit premier panneau (11) et ladite seconde section (622) comprenant une pièce femelle prévue sur ledit second panneau (12) apte à être accouplées.

3. Deux panneaux de meubles ou d'autres articles d'ameublement selon la revendication 2, **caractérisés en ce que** ladite pièce mâle de ladite première section (621) fournit une extension à baïonnette (624) et ladite pièce femelle de ladite seconde section (622) fournit un œillet à fente (626) apte à recevoir ladite extension à baïonnette (624) en prise formant un accouplement à baïonnette.

4. Deux panneaux de meuble ou d'autres éléments d'ameublement selon la revendication 3, **caractérisés en ce que** ladite extension à baïonnette (624), une fois insérée dans ledit œillet à fente (626) prévu dans ledit second panneau (12), est tournée de 90° sur un plan (H) parallèle audit second panneau (12).

5. Deux panneaux de meuble ou d'autres éléments d'ameublement selon une ou plusieurs des revendications précédentes de 1 à 4, **caractérisés en ce que** ladite première section (621) agencée sur ledit premier panneau (11) possédant un élément cylindrique dont une extrémité coopère avec ledit système de liaison et de blocage stable (114) positionné dans ledit premier panneau (11).

6. Deux panneaux de meuble ou d'autres éléments d'ameublement selon la revendication 5, **caractérisés en ce que** ledit système de liaison et de blocage stable se présente sous la forme d'une vis d'arrêt ou vis sans tête (114) coopérant avec un logement (232) formé dans ledit corps cylindrique de ladite première section (621).

7. Deux panneaux de meuble ou d'autres éléments d'ameublement selon une ou plusieurs des revendications précédentes, **caractérisés en ce que** ledit premier panneau (11) est un panneau horizontal et ledit second panneau (12) est un panneau vertical.
